# EUROPEAN PATENT APPLICATION

(11) **EP 1 928 163 A2**
(43) Date of publication of application: **04.06.2008**
(21) Application number: 07022131.2
(22) Date of filing: 14.11.2007
(51) Int. Cl.: H04N 1/32

(54) **Facsimile communication apparatus**

(30) Priority: 30.11.2006 JP 2006323673
(71) Applicant: Murata Machinery, Ltd., 3 Minami Ochiai-cho, Kisshoin Minami-ku, Kyoto-shi, Kyoto (JP)
(72) Inventor: Murata, Yoshinori c/o Murata Machinery, Ltd., Kyoto-shi Kyoto 612-8686 (JP)
(74) Representative: Schoppe, Fritz

(57) **Abstract**

The invention provides a facsimile communication apparatus which calls a telephone number and receives a called telephone number from a called station. This apparatus includes a collation part which collates the called telephone number with the calling telephone number, a collation designation part which designates, for each telephone number, necessity/unnecessity of the collation by the collation part, a transmission part which transmits image data to the transmission destination, and a control part which allows the collation part to perform the collation when the collation designation part designates the necessity of the collation, allows the transmission part to transmit the image data when the collation part determines that the called telephone number matches with the calling telephone number, prohibits the transmission part from transmitting the image data when the collation part determines that the called telephone number does not match with the calling telephone number, and allows the transmission part to transmit the image data unconditionally when the collation designation part designates the unnecessity of the collation.

## Description

### CROSS-REFERENCE TO RELATED APPLICATIONS

This application claims priority to Japanese Patent Application No. 2006-323673, filed on November 30, 2006, which application is hereby incorporated by reference in its entirety.

### BACKGROUND OF THE INVENTION

### 1. Field of the Invention

The present invention relates to facsimile communication apparatuses, in particular, a facsimile communication apparatus capable of transmitting a fax after identification of a destination based on identification information replied from a called station.

### 2. Description of Related Art

Conventionally, there has been known a facsimile communication apparatus which prevents erroneous data transmission. For example, it is assumed herein that a user dials a telephone number correctly so as to carry out data communications with a desired party. However, if a line connection is established improperly due to a malfunction of a circuit switcher on a telephone company, the facsimile communication apparatus prevents predetermined data from being transmitted to a wrong party. The facsimile communication apparatus includes a comparison unit for comparing data about a calling dial number for establishing a line connection with a called side, with data about a called dial number transmitted from the called side through the line connection. If the two dial numbers do not match with each other, the facsimile communication apparatus does not transmit data to be transmitted originally, but transmits predetermined data prepared separately, for example, data containing a message for notification of erroneous data transmission.

Conventionally, there has been also known another facsimile communication apparatus which has the following configuration. According to the facsimile communication apparatus, that is, an operator uses a call confirmation switch or the like to make a selection as to determination whether or not a calling telephone number matches with a telephone number contained in a CSI (Called Subscriber Identification) signal transmitted from a communication apparatus which has been called up.

### BRIEF SUMMARY OF THE INVENTION

Typically, a called station registers an external number as a telephone number of a transmission terminal. Consequently, if an extension number is called, the external number contained as the telephone number of the transmission terminal in a CSI signal replied from the called station does not match with the extension number, so that data transmission is failed even when a line connection is established properly. The aforementioned conventional technique still has room for improvement in terms of this point.

The present invention has been devised in view of the aforementioned circumstances. An object of the present invention is to provide a facsimile communication apparatus which is excellent in usability.

The present invention provides a facsimile communication apparatus including: a destination acceptance part configured to accept a telephone number of a transmission destination; a collation part configured to call the telephone number, to receive a called telephone number from a called station, and to collate the called telephone number with the calling telephone number; a collation designation part configured to designate, for each telephone number, necessity/unnecessity of the collation by the collation part; a transmission part configured to transmit image data to the transmission destination; and a control part configured to allow the collation part to perform the collation when the collation designation part designates the necessity of the collation, to allow the transmission part to transmit the image data when the collation part determines that the called telephone number matches with the calling telephone number, to prohibit the transmission part from transmitting the image data when the collation part determines that the called telephone number does not match with the calling telephone number, and to allow the transmission part to transmit the image data unconditionally when the collation designation part designates the unnecessity of the collation.

According to the present invention, the facsimile communication apparatus permits transmission of a fax when a calling telephone number matches with a telephone number replied from a called station. The facsimile communication apparatus according to the present invention can designate, for each telephone number, necessity/unnecessity of collation with the called telephone number. Therefore, the facsimile communication apparatus according to the present invention can transmit data without collation of telephone numbers to a transmission destination which requires no collation. Thus, the facsimile communication apparatus according to the present invention eliminates a disadvantage that a calling telephone number (extension number: PBX) which requires no collation does not match with a called telephone number (external number: PSTN) which is a telephone number replied from a called station, so that data transmission is failed even when a line connection is established properly. In addition, the facsimile communication apparatus according to the present invention is improved in usability.

The facsimile communication apparatus according to the present invention may further include a telephone number storage part configured to store telephone numbers of plural destinations. Herein, the destination acceptance part accepts the telephone number of the transmission destination selected from the telephone numbers of the plural destinations stored in the telephone number storage part. Further, the control part allows the collation part to perform the collation when the telephone number accepted by the destination acceptance part is not selected from the telephone numbers stored in the telephone number storage part, allows the transmission part to transmit the image data when the collation part determines that the called telephone number matches with the calling telephone number, prohibits the transmission part from transmitting the image data when the collation part determines that the called telephone number does not match with the calling telephone number, and allows the transmission part to transmit the image data unconditionally when the telephone number accepted by the destination acceptance part is selected from the telephone numbers stored in the telephone number storage part.

With this configuration, the facsimile communication apparatus according to the present invention can transmit data without collation of telephone numbers in a case of calling one of a telephone number for one-touch dialing and a telephone number for speed dialing each used frequently or a telephone number registered in an address book. Thus, the facsimile communication apparatus according to the present invention eliminates a disadvantage that such a telephone number does not match with a registered extension number, so that data transmission is failed even when a line connection is established properly. In addition, the facsimile communication apparatus according to the present invention is improved in usability.

In the facsimile communication apparatus according to the present invention, the collation designation part includes a setting acceptance part configured to accept, for each telephone number, a setting as to the necessity/unnecessity of the collation by the collation part, and a setting registration part configured to register the setting accepted by the setting acceptance part in the telephone number storage part in correspondence with the telephone number. Further, the control part refers to the telephone number storage part to allow the transmission part to transmit the image data unconditionally when the setting corresponding to the telephone number accepted by the destination acceptance part is a setting as to the unnecessity of the collation, to allow the collation part to perform the collation when the setting corresponding to the telephone number accepted by the destination acceptance part is a setting as to the necessity of the collation, to allow the transmission part to transmit the image data when the collation part determines that the called telephone number matches with the calling telephone number, and to prohibit the transmission part from transmitting the image data when the collation part determines that the called telephone number does not match with the calling telephone number. With this configuration, the facsimile communication apparatus according to the present invention can previously make a setting as to necessity/unnecessity of collation, for each telephone number.

In the facsimile communication apparatus according to the present invention, the setting acceptance part accepts a setting for defining an extension number as the telephone number stored in the telephone number storage part to automatically make the setting as to the unnecessity of the collation, and automatically makes the setting as to the necessity of the collation except the acceptance of the setting. With this configuration, the facsimile communication apparatus according to the present invention can omit collation automatically when an extension number is defined as a telephone number.

The facsimile communication apparatus according to the present invention may further include a determination part configured to determine whether a predetermined command symbol indicating the unnecessity of the collation with the called telephone number is added to the telephone number accepted by the destination acceptance part. Herein, the control part allows the transmission part to transmit the image data unconditionally when the determination part determines that the command symbol is added to the telephone number. With this configuration, the facsimile communication apparatus according to the present invention can omit collation in a case of accepting a telephone number to which a predetermined command symbol is added. Herein, an extension number may be registered with a command symbol added thereto.

The facsimile communication apparatus according to the present invention may further include an operation acceptance part configured to accept an operation for adding the command symbol to the telephone number of the transmission destination. With this configuration, the facsimile communication apparatus according to the present invention can omit collation by accepting a telephone number to which a predetermined command symbol is added.

Herein, the present invention is also directed to an optional combination of the aforementioned constituent elements, as well as a method, an apparatus, a system, a recording medium and a computer program for realizing the present invention.

The present invention can provide a facsimile communication apparatus which is excellent in usability.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 is a block diagram illustrating a configuration of a facsimile communication apparatus according to a first embodiment of the present invention;

Fig. 2 is a functional block diagram of the facsimile communication apparatus illustrated in Fig. 1;

Fig. 3 illustrates a speed dialing number setting screen in the facsimile communication apparatus according to the first embodiment;

Fig. 4 illustrates an architecture of a speed dialing number storage part of an address book storage part illustrated in Fig. 2;

Fig. 5 is a flowchart illustrating operations of the facsimile communication apparatus according to the first embodiment;

Fig. 6 is a flowchart illustrating operations of a facsimile communication apparatus according to a second embodiment of the present invention;

Fig. 7 illustrates an architecture of a speed dialing number storage part in a facsimile communication apparatus according to a third embodiment of the present invention; and

Fig. 8 is a flowchart illustrating operations of the facsimile communication apparatus according to the third embodiment.

### DETAILED DESCRIPTION OF PREFERRED EMBODIMENTS

With reference to the drawings, hereinafter, description will be given of preferred embodiments of the present invention. In the drawings, similar constituent elements are denoted by similar reference numerals; therefore, repetitive description thereof will not be given here.

### (First Embodiment)

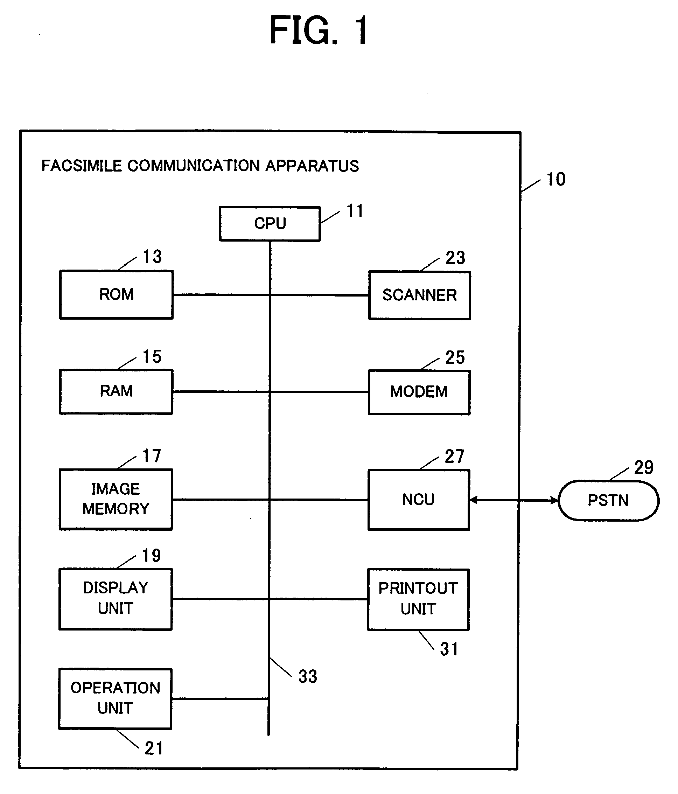

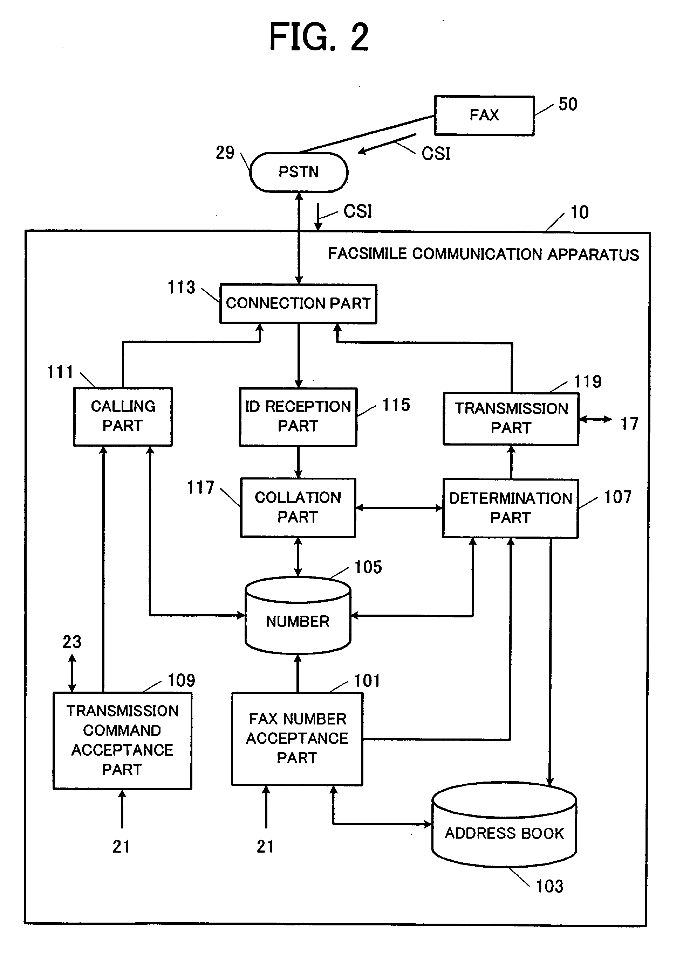

Fig. 1 is a block diagram illustrating a configuration of a facsimile communication apparatus 10 according to a first embodiment of the present invention. Fig. 2 is a functional block diagram of the facsimile communication apparatus 10 illustrated in Fig. 1. It is to be noted that Figs. 1 and 2 illustrate only components related to essentials of the present invention.

As illustrated in Fig. 1, the facsimile communication apparatus 10 according to the first embodiment includes a CPU (Central Processing Unit) 11, a ROM (Read Only Memory) 13, a RAM (Random Access Memory) 15, an image memory 17, a display unit 19, an operation unit 21, a scanner 23, a modem 25, an NCU (Network Control Unit) 27 and a printout unit 31.

In the facsimile communication apparatus 10, the CPU 11 is mutually connected to the remaining units via a bus 33, executes a program which is previously stored in the ROM 13, and controls not only the respective units, but also the entire apparatus. The ROM 13 previously stores various programs and data each used for actuating the facsimile communication apparatus 10. The RAM 15 has a working area used by the CPU 11. The image memory 17 stores image data of a document read by the scanner 23. The display unit 19 is, for example, an LCD (Liquid Crystal Display), a lamp, an LED (Light Emitting Diode) or a CRT (Cathode Ray Tube) monitor, and is provided on an operation panel of the facsimile communication apparatus 10. The display unit 19 displays various kinds of information, operating screens, and functions or statuses of the facsimile communication apparatus 10.

The operation unit 21 is, for example, an operation button, a switch, a lever, a touch panel, a keyboard or a mouse, and is also provided on the operation panel of the facsimile communication apparatus 10. The operation unit 21 accepts various settings, commands and inputs from a user. The scanner 23 uses a CCD (Charge Coupled Device) to read a document, and then generates image data. The modem 25 is connected to a PSTN (Public Switched Telephone Network) 29 via the NCU 27, and converts digital data into an audio signal and vice versa in order to carry out communications with another apparatus on the PSTN 29. The printout unit 31 prints out, as a copy, the image data of the document read by the scanner 23 or outputs, onto a sheet of paper, image data of a fax document which is transmitted from another apparatus to the modem 25 via the PSTN 29.

The facsimile communication apparatus 10 according to the first embodiment includes a destination acceptance part (corresponding to a fax number acceptance part 101), a collation part (corresponding to a calling part 111, an ID reception part 115 and a collation part 117), a collation designation part (corresponding to an address book storage part 103 and the fax number acceptance part 101), a transmission part (corresponding to a transmission part 119) and a control part (corresponding to a determination part 107). The destination acceptance part accepts a telephone number of a transmission destination. The collation part calls the telephone number, receives a called telephone number from a called station, and collates the called telephone number with the calling telephone number. The collation designation part designates, for each telephone number, necessity/unnecessity of the collation by the collation part. The transmission part transmits image data to the transmission destination. The control part allows the collation part to perform the collation when the collation designation part designates the necessity of the collation. Further, the control part allows the transmission part to transmit the image data when the collation part determines that the called telephone number matches with the calling telephone number. Still further, the control part prohibits the transmission part from transmitting the image data when the collation part determines that the called telephone number does not match with the calling telephone number. Yet further, the control part allows the transmission part to transmit the image data unconditionally when the collation designation part designates the unnecessity of the collation.

Moreover, each unit in the facsimile communication apparatus 10 is realized by an optional combination of hardware with software. Examples of the hardware and the software include a CPU in an optional computer, a memory, a program loaded onto the memory, a storage unit such as a hard disk for storing the program, an interface for a network connection, and the like. It would be understood by a person who skilled in the art that a method and an apparatus for realizing the aforementioned unit is modified variously. Fig. 2 does not illustrate hardware blocks, but illustrates functional blocks.

In the first embodiment, necessity/unnecessity of an ID check for collating a calling telephone number with a called telephone number can be previously designated for each telephone number. The facsimile communication apparatus 10 is connected to another facsimile communication apparatus 50 via the PSTN 29, and receives NSF (Non-Standard Facilities)/CSI (Called Subscriber Identification)/DIS (Digital Identification Signal) signals from the facsimile communication apparatus 50. Herein, the CSI signal contains a telephone number of a transmission terminal which is previously registered in the facsimile communication apparatus 50.

In the first embodiment, the "ID check" denotes collation as to whether or not the calling telephone number matches with the telephone number of the called station which is contained in the CSI signal. If the two telephone numbers match with each other in the ID check, transmission of image data is permitted. Typically, an external number is registered as the telephone number of the transmission terminal in many cases. Consequently, if an extension number is called, the external number contained as the telephone number of the transmission terminal in the CSI signal replied from the called station does not match with the extension number, so that transmission of image data is failed even when a line connection is established properly. In order to avoid this disadvantage, the facsimile communication apparatus 10 according to the first embodiment can designate, for each telephone number, the necessity/unnecessity of the ID check.

More specifically, the facsimile communication apparatus 10 according to the first embodiment includes the fax number acceptance part 101, the address book storage part 103 (illustrated as "Address book" in Fig. 2), a number temporal storage part 105 (illustrated as "Number" in Fig. 2), the determination part 107, a transmission command acceptance part 109, the calling part 111, a connection part 113, the ID reception part 115, the collation part 117 and the transmission part 119.

The fax number acceptance part 101 accepts the telephone number of the transmission destination, for example, a telephone number of a transmission destination which is inputted by the user through the operation unit 21. Alternatively, the fax number acceptance part 101 accepts a telephone number which is selected by the user from a telephone directory stored in the address book storage part 103.

The address book storage part 103 stores information such as names and telephone numbers (fax numbers) of plural transmission destinations. In the first embodiment, further, the facsimile communication apparatus 10 can register a transmission destination in correspondence with a predetermined operating key for one-touch dialing or can register a transmission destination in correspondence with a speed dialing number for speed dialing. Herein, the facsimile communication apparatus 10 stores information about the registration.

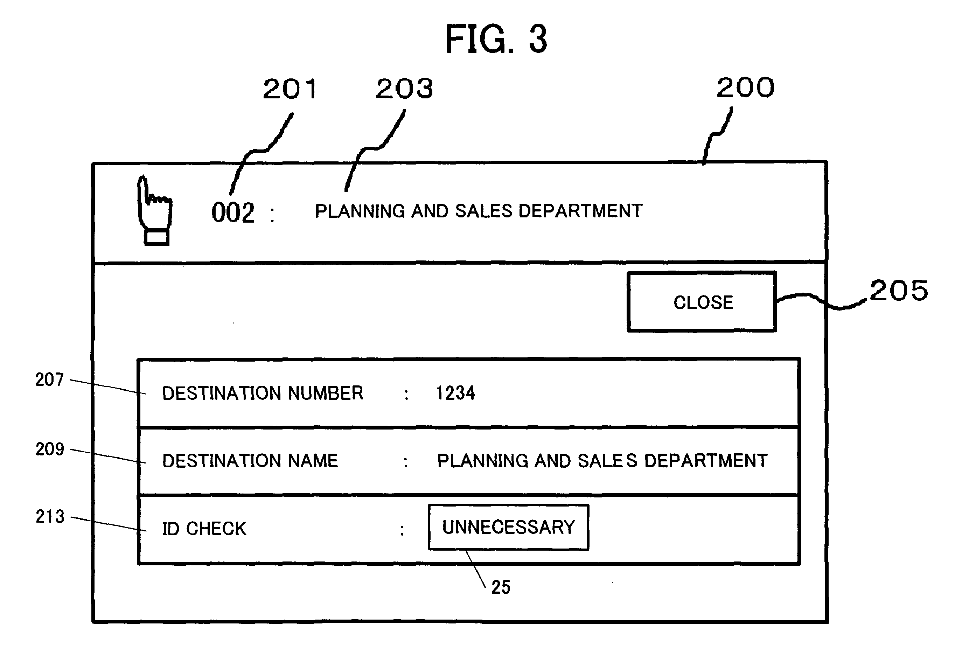

In the first embodiment, the necessity/unnecessity of the ID check is previously designated for each telephone number to set the speed dialing number. Fig. 3 illustrates a speed dialing number setting screen in the facsimile communication apparatus 10 according to the first embodiment. As illustrated in Fig. 3, in a setting screen 200, a destination 203 can be set for each speed dialing number 201. The setting screen 200 includes a destination number input column 207, a destination name input column 209 and an ID check designation column 213. In the ID check designation column 213, a pointer 215 alternately displays "Necessary" and "Unnecessary" as to the necessity/unnecessity of the ID check. The user can designate the necessity/unnecessity of the ID check through the ID check designation column 213. After completion of the settings in the setting screen 200, the user depresses a close button 205 to close the setting screen 205; thus, the settings are completed. Contents of the settings are stored in the address book storage part 103.

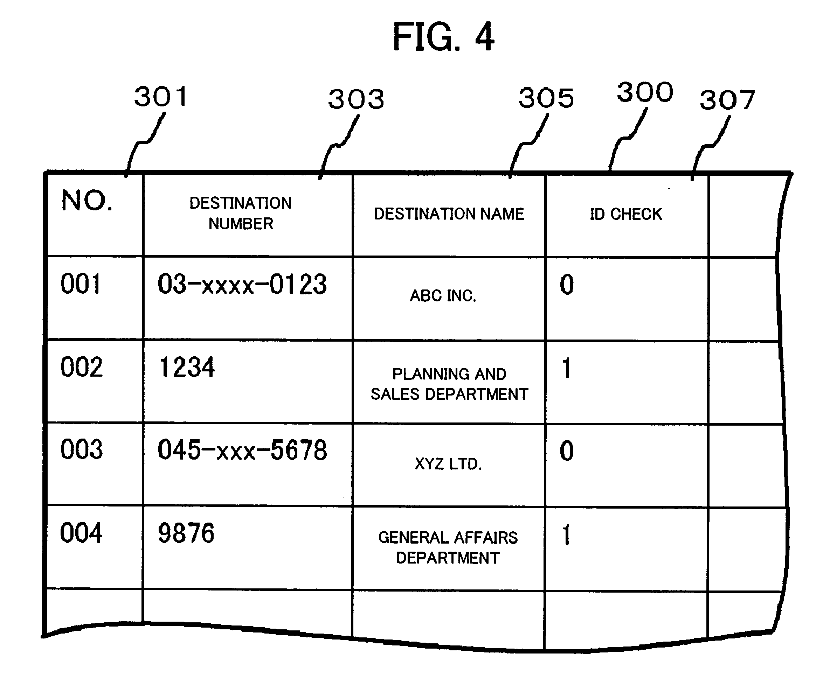

Fig. 4 illustrates an architecture of a speed dialing number storage part 300 of the address book storage part 103. The speed dialing number storage part 300 stores, for each speed dialing number 301, a destination number 303, a destination name 305 and an ID check designation 307. In the first embodiment, the contents of the settings regarding the speed dialing numbers set in the setting screen 200 illustrated in Fig. 3 are stored in the speed dialing number storage part 300 illustrated in Fig. 4. As illustrated in Fig. 4, the ID check designation 307 records "0" when the necessity of the ID check is designated in the ID check designation column 213 illustrated in Fig. 3. On the other hand, the ID check designation 307 records "1" when the unnecessity of the ID check is designated in the ID check designation column 213 illustrated in Fig. 3.

With reference to Fig. 2 again, the number temporal storage part 105 temporarily stores a telephone number accepted by the fax number acceptance part 101. When the fax number acceptance part 101 accepts the telephone number, the determination part 107 refers to the address book storage part 103 on the basis of the telephone number stored in the number temporal storage part 105 to read the setting as to the necessity/unnecessity of the ID check. For example, the determination part 107 refers to the ID check designation 307 of the speed dialing number storage part 300 illustrated in Fig. 4 to determine whether or not the ID check is necessary.

The determination part 107 determines that the ID check is necessary, and then issues a collation command to the collation part 117. On the other hand, the determination part 107 determines that the ID check is unnecessary, and then issues a transmission command to the transmission part 119 without issuing the collation command to the collation part 117. Further, the determination part 107 determines that the ID check is necessary, and then controls the transmission part 119 on the basis of a result of the collation by the collation part 117. More specifically, when two telephone numbers match with each other as the result of the collation by the collation part 117 (to be described later), the determination part 107 allows the transmission part 119 to transmit image data stored in the image memory 17. On the other hand, when the two telephone numbers do not match with each other, the determination part 107 prohibits the transmission part 119 from transmitting the image data.

The transmission command acceptance part 109 accepts a fact that the user depresses a transmission start button (not illustrated) provided on the operation panel. After acceptance of the depression of the transmission start button, the transmission command acceptance part 109 issues a document read command to the scanner 23. After reception of a document read completion notification from the scanner 23, the transmission command acceptance part 109 issues a calling command to the calling part 111. The calling part 111 calls the telephone number stored in the number temporal storage part 105 in response to the command issued by the transmission command acceptance part 109. The connection part 113 issues, to the modem 25 and the NCU 27, a command for establishment of a connection with the PSTN 29 and a command for control of communications with the facsimile communication apparatus 50.

The ID reception part 115 receives NSF/CSI/DIS signals from the facsimile communication apparatus 50 connected thereto via the PSTN 29. The collation part 117 performs collation as to whether or not the last four digits of the telephone number of the transmission terminal contained in the CSI signal received by the ID reception part 115 matches with the last four digits of the telephone number stored in the number temporal storage part 105. In the first embodiment, the collation is performed as to the last four digits of the telephone number; however, the present invention is not limited to this example. The collation part 117 sends a result of the collation to the determination part 107.

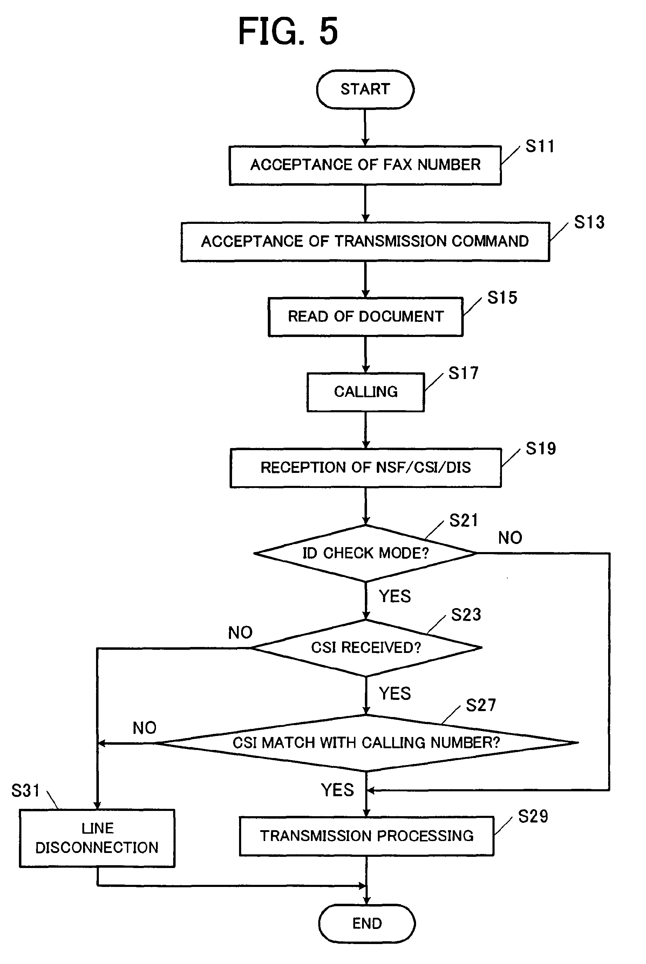

Next, description will be given of operations of the facsimile communication apparatus 10 configured as described above according to the first embodiment. Fig. 5 is a flowchart illustrating the operations of the facsimile communication apparatus 10 according to the first embodiment.

First, description will be given of processing executed when the ID check is unnecessary. In the facsimile communication apparatus 10, the fax number acceptance part 101 accepts a fax number (S11). It is assumed herein that the user selects a speed dialing number "002" as a destination. On the basis of the speed dialing number "002" accepted by the operation unit 21, the fax number acceptance part 101 refers to the speed dialing number storage part 300 of the address book storage part 103 (see Fig. 4) to acquire a destination number "1234", and then stores the destination number "1234" in the number temporal storage part 105.

Next, the operation unit 21 accepts depression of the transmission start button (S13), so that the transmission command acceptance part 109 issues a document read command to the scanner 23 and then the scanner 23 stores image data in the image memory 17 (S15). Next, the calling part 111 calls the telephone number stored in the number temporal storage part 105 (S17). The connection part 113 establishes a line connection with the facsimile communication apparatus 50 on the PSTN 29, and the ID reception part 115 receives NSF/CSI/DIS signals replied from the facsimile communication apparatus 50 (S19).

The determination part 107 accesses the speed dialing number storage part 300 of the address book storage part 103 (see Fig. 4) to confirm the ID check designation 307 on the basis of the speed dialing number "002" accepted by the fax number acceptance part 101 or the destination number "1234" (S21). Herein, "1" in the ID check designation 307 denotes the unnecessity of the ID check (NO in S21). Accordingly, the determination part 107 issues a transmission command to the transmission part 119, so that the transmission part 119 transmits the image data stored in the image memory 17 to the facsimile communication apparatus 50 (S29).

In order to register an extension number in the speed dialing number storage part 300, as described above, when the unnecessity of the ID check is designated previously, the ID check is automatically prohibited from being performed. Thus, the facsimile communication apparatus 10 according to the first embodiment eliminates a disadvantage that data transmission is failed even when a line connection is established properly. In addition, the facsimile communication apparatus 10 is improved in usability.

Next, description will be given of processing executed when the ID check is necessary. In the facsimile communication apparatus 10, first, the fax number acceptance part 101 accepts a fax number (S11). It is assumed herein that the user selects a speed dialing number "001" as a destination. On the basis of the speed dialing number "001" accepted by the operation unit 21, the fax number acceptance part 101 refers to the speed dialing number storage part 300 of the address book storage part 103 (see Fig. 4) to acquire a destination number "03-XXXX-0123", and then stores the destination number "03-XXXX-0123" in the number temporal storage part 105.

Next, the program proceeds to steps S13, S15, S17 and S19 as described above. When the ID reception part 115 receives NSF/CSI/DIS signals, the determination part 107 accesses the speed dialing number storage part 300 of the address book storage part 103 (see Fig. 4) to confirm the ID check designation 307 on the basis of the speed dialing number "001" accepted by the fax number acceptance part 101 or the destination number "03-XXXX-0123" (S21). Herein, "0" in the ID check designation 307 denotes the necessity of the ID check (YES in S21).

Next, the collation part 117 confirms reception of the CSI signal (S23). If the ID reception part 115 fails to receive the CSI signal (NO in S23), the collation part 117 issues a line disconnection command to the connection part 113 (S31); thus, the processing is completed. On the other hand, if the ID reception part 115 successfully receives the CSI signal (YES in S23), the collation part 117 compares the last four digits of the telephone number of the transmission terminal contained in the CSI signal with the last four digits of the telephone number stored in the number temporal storage part 105 (S27). Herein, if the two numbers match with each other (YES in S27), the collation part 117 issues a transmission command to the transmission part 119, so that the transmission part 119 transmits the image data stored in the image memory 17 to the facsimile communication apparatus 50 (S29). On the other hand, if the two numbers do not match with each other (NO in S27), the collation part 117 issues a line disconnection command to the connection part 113 (S31); thus, the processing is completed. Herein, the collation part 117 may issue a transmission prohibition command to the transmission part 119 in order to delete the data stored in the image memory 17.

As described above, the facsimile communication apparatus 10 according to the first embodiment of the present invention permits transmission of a fax when a calling telephone number matches with a telephone number contained in a CSI signal replied from a called station. The facsimile communication apparatus 10 according to the first embodiment can designate, for each telephone number, necessity/unnecessity of collation with the called telephone number. Therefore, the facsimile communication apparatus 10 according to the first embodiment can transmit data without collation of telephone numbers to a transmission destination which requires no collation. Thus, when "1" is recorded in the ID check designation 300 of the speed dialing storage part 300 illustrated in Fig. 4, the facsimile communication apparatus 10 according to the first embodiment eliminates a disadvantage that a calling telephone number (extension number) which requires no collation does not match with a called telephone number (external number) which is a telephone number replied from a called station, so that data transmission is failed even when a line connection is established properly. In addition, the facsimile communication apparatus 10 according to the first embodiment is improved in usability. (Second Embodiment)

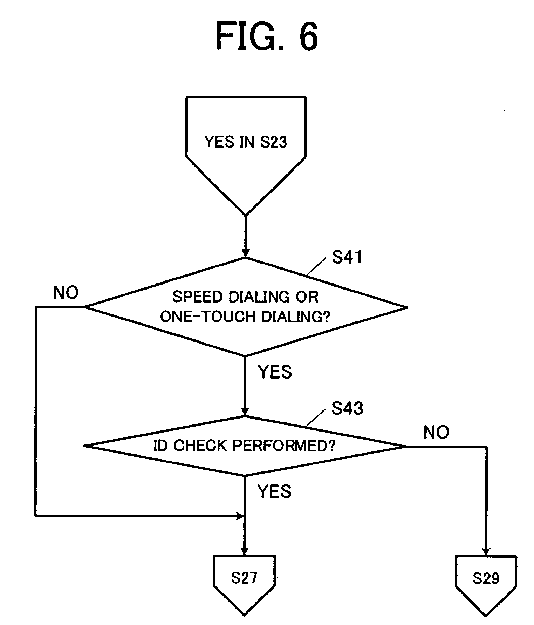

Fig. 6 is a flowchart illustrating operations of a facsimile communication apparatus according to a second embodiment of the present invention. The facsimile communication apparatus according to the second embodiment is similar in configuration to the facsimile communication apparatus according to the first embodiment illustrated in Figs. 1 to 4. However, the facsimile communication apparatus according to the second embodiment is different from the facsimile communication apparatus according to the first embodiment in a point that if an ID reception part 115 successfully receives a CSI signal (YES in S23 of Fig. 5), a determination part 107 determines whether or not one of speed dialing and one-touch dialing is executed (S41), thereby determining whether or not an ID check is necessary (S43), as illustrated in Fig. 6. Hereinafter, description will be given of the facsimile communication apparatus according to the second embodiment with reference to Figs. 2 and 4.

The facsimile communication apparatus according to the second embodiment includes a telephone number storage part (corresponding to an address book storage part 103 and a speed dialing number storage part 300) which stores telephone numbers of plural destinations. Herein, a destination acceptance part (corresponding to a fax number acceptance part 101) accepts a telephone number of a transmission destination selected from the telephone numbers of the plural destinations stored in the telephone number storage part. A control part (corresponding to a determination part 107) allows a collation part 117 to perform collation when the telephone number accepted by the destination acceptance part (corresponding to the fax number acceptance part 101) is not selected from the telephone numbers stored in the telephone number storage part (corresponding to the address book storage part 103 and the speed dialing number storage part 300). Further, the control part (corresponding to the determination part 107) allows a transmission part 119 to transmit image data when the collation part 117 determines that a called telephone number matches with a calling telephone number. Still further, the control part (corresponding to the determination part 107) prohibits the transmission part 119 from transmitting the image data when the collation part 117 determines that the called telephone number does not match with the calling telephone number. Yet further, the control part (corresponding to the determination part 107) allows the transmission part 119 to transmit the image data unconditionally when the telephone number accepted by the destination acceptance part (corresponding to the fax number acceptance part 101) is selected from the telephone numbers stored in the telephone number storage part (corresponding to the address book storage part 103 and the speed dialing number storage part 300).

In the second embodiment, that is, an ID check is performed unconditionally in a case of dialing other than speed dialing or one-touch dialing. On the other hand, the necessity/unnecessity of the ID check is determined in accordance with a setting as to the necessity/unnecessity of the ID check in a case of the speed dialing or the one-touch dialing. The necessity/unnecessity of the ID check is set for not only the telephone number for the speed dialing or the telephone number for the one-touch dialing, but also a telephone number registered in a telephone directory; thus, the determination as to whether or not the ID check is necessary may be made to the telephone number registered in the telephone directory in accordance with the setting.

With this configuration, the facsimile communication apparatus according to the second embodiment can transmit data without collation of telephone numbers in a case of calling one of a telephone number for one-touch dialing and a telephone number for speed dialing each used frequently or a telephone number registered in an address book. Thus, the facsimile communication apparatus according to the second embodiment eliminates a disadvantage that such a telephone number does not match with a registered extension number, so that data transmission is failed even when a line connection is established properly. In addition, the facsimile communication apparatus according to the second embodiment is improved in usability. (Third Embodiment)

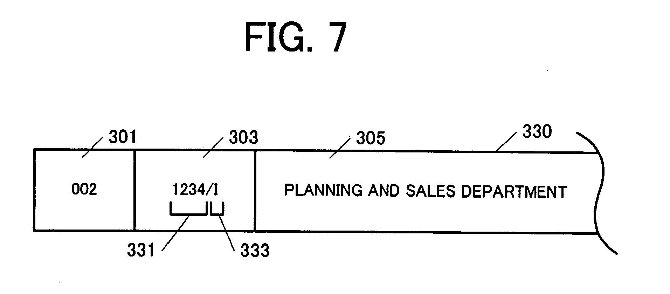

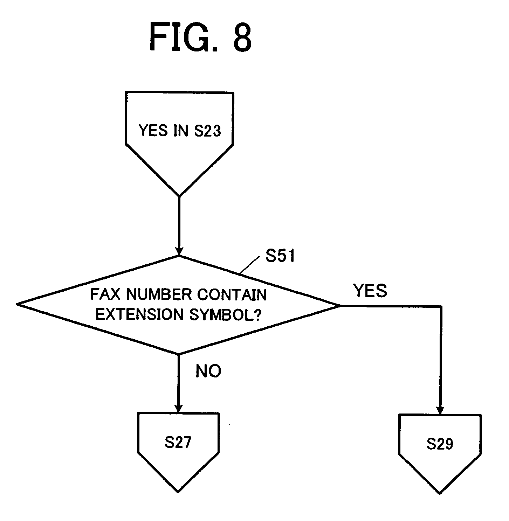

Fig. 7 illustrates an architecture of a speed dialing number storage part in a facsimile communication apparatus according to a third embodiment of the present invention. Fig. 8 is a flowchart illustrating operations of the facsimile communication apparatus according to the third embodiment. The facsimile communication apparatus according to the third embodiment is similar in configuration to the facsimile communication apparatus according to the first embodiment illustrated in Figs. 1 to 4. However, the facsimile communication apparatus according to the third embodiment is different from the facsimile communication apparatus according to the first embodiment in points that a speed dialing number storage part 330 illustrated in Fig. 7 is provided instead of the speed dialing number storage part 300 illustrated in Fig. 4 and necessity/unnecessity of an ID check is determined on the basis of a command symbol 333 added to an extension number 331 (S51 in Fig. 8).

The facsimile communication apparatus according to the third embodiment may include a determination part 107 which determines whether a predetermined command symbol 333 indicating unnecessity of collation with a called telephone number is added to a telephone number accepted by a destination acceptance part (corresponding to a fax number acceptance part 101). Herein, a control part (corresponding to the determination part 107) allows a transmission part 119 to transmit image data unconditionally when the command symbol is added to the telephone number.

As illustrated in Fig. 7, for example, "/I" is defined as the command symbol 333. In the setting screen 200 illustrated in Fig. 3, a number and "/I" inputted subsequent to the number are registered as a destination number in the destination number input column 207. Thus, it becomes unnecessary to perform a setting as to the unnecessity of the ID check. Unlike the speed dialing number storage part 300 illustrated in Fig. 4, that is, the speed dialing number storage part 330 illustrated in Fig. 7 has no ID check designation 307.

Alternatively, the speed dialing number storage part 300 illustrated in Fig. 4 may store, as a destination number, a telephone number to which the command symbol 333 in the third embodiment is added. As a result, the necessity/unnecessity of the ID check can be determined in accordance with one of the command symbol 333 and the ID check designation 307, or a predetermined priority.

Herein, the command symbol 333 is not limited to "/I". For example, the command symbol 333 may take optional forms such as another symbols, characters, numerals, and a combination thereof.

With this configuration, the facsimile communication apparatus according to the third embodiment can omit the collation in the case of accepting the telephone number to which the predetermined command symbol 333 is added. Herein, an extension number may be registered with a command symbol added thereto.

The facsimile communication apparatus according to the third embodiment may further include an operation acceptance part (corresponding to an operation unit 21) which accepts an operation for adding a command symbol to a telephone number of a transmission destination.

More specifically, upon dialing of a telephone number of a destination through the operation unit 21, the user additionally inputs a predetermined command symbol subsequent to the input of the telephone number to designate necessity/unnecessity of an ID check. That is, the fax number acceptance part 101 can accept the command symbol in addition to the telephone number, and the determination part 107 can determine the necessity/unnecessity of the ID check by using the accepted command symbol. With this configuration, the user can designate the unnecessity of the ID check by inputting the predetermined command symbol in addition to the telephone number.

In the facsimile communication apparatus 10, further, command symbols are brought into correspondence with predetermined operation keys in advance. The fax number acceptance part 101 can accept predetermined operation key operations in addition to the input of the telephone number, and the determination part 107 can determine the necessity/unnecessity of the ID check on the basis of the predetermined operation key operations.

The preferred embodiments of the present invention have been described with reference to the drawings. However, the foregoing embodiments are merely examples of the present invention. Therefore, the present invention may be modified variously in addition to the foregoing embodiments.

In a facsimile communication apparatus according to another embodiment of the present invention, for example, a setting acceptance part (corresponding to an operation unit 21) accepts a setting for defining an extension number as a telephone number stored in a telephone number storage part (corresponding to an address book storage part 103 and a speed dialing number storage part 300) to automatically make a setting as to unnecessity of collation, and automatically makes a setting as to necessity of the collation except the acceptance of the setting. For example, the speed dialing number storage part 300 illustrated in Fig. 4 is provided with a setting column (not illustrated) for designating whether or not the destination number 303 is an extension number, and the determination part 107 can determine the necessity/unnecessity of the ID check on the basis of presence/absence of the designation that the telephone number is the extension number.
Herein, the CSI/NSF/DIS signals are specified in ITU-T30 (International Telecommunication Union Recommendation T-30).

With this configuration, the facsimile communication apparatus can omit collation automatically in a case of defining an extension number as a telephone number.

While the present invention has been described with respect to preferred embodiments thereof, it will be apparent to those skilled in the art that the disclosed invention may be modified in numerous ways and may assume many embodiments other than those specifically set out and described above. Accordingly, it is intended by the appended claims to cover all modifications of the present invention that fall within the true spirit and scope of the present invention.

## Claims

1. A facsimile communication apparatus (10) comprising:
a destination acceptance part (109) configured to accept a telephone number of a transmission destination; and
a collation part (117) configured to call the telephone number, to receive a called telephone number from a called station, and to collate the called telephone number with the calling telephone number,
the facsimile communication apparatus being **characterized by** comprising:
a collation designation part configured to designate, for each telephone number, necessity/unnecessity of the collation by the collation part;
a transmission part (119) configured to transmit image data to the transmission destination; and
a control part (11) configured to allow the collation part to perform the collation when the collation designation part designates the necessity of the collation, to allow the transmission part to transmit the image data when the collation part determines that the called telephone number matches with the calling telephone number, to prohibit the transmission part from transmitting the image data when the collation part determines that the called telephone number does not match with the calling telephone number, and to allow the transmission part to transmit the image data unconditionally when the collation designation part designates the unnecessity of the collation.

2. The facsimile communication apparatus according to claim 1, further comprising:
a telephone number storage part (103) configured to store telephone numbers of plural destinations, wherein
the destination acceptance part accepts the telephone number of the transmission destination selected from the telephone numbers of the plural destinations stored in the telephone number storage part (103), and
the control part allows the collation part (117) to perform the collation when the telephone number accepted by the destination acceptance part is not selected from the telephone numbers stored in the telephone number storage part (103), allows the transmission part to transmit the image data when the collation part determines that the called telephone number matches with the calling telephone number, prohibits the transmission part from transmitting the image data when the collation part determines that the called telephone number does not match with the calling telephone number, and allows the transmission part to transmit the image data unconditionally when the telephone number accepted by the destination acceptance part is selected from the telephone numbers stored in the telephone number storage part.

3. The facsimile communication apparatus according to claim 2, wherein
the collation designation part includes a setting acceptance part (101) configured to accept, for each telephone number, a setting as to the necessity/unnecessity of the collation by the collation part, and a setting registration part configured to register the setting accepted by the setting acceptance part in the telephone number storage part in correspondence with the telephone number, and
the control part refers to the telephone number storage part to allow the transmission part to transmit the image data unconditionally when the setting corresponding to the telephone number accepted by the destination acceptance part is a setting as to the unnecessity of the collation, to allow the collation part to perform the collation when the setting corresponding to the telephone number accepted by the destination acceptance part is a setting as to the necessity of the collation, to allow the transmission part to transmit the image data when the collation part determines that the called telephone number matches with the calling telephone number, and to prohibit the transmission part from transmitting the image data when the collation part determines that the called telephone number does not match with the calling telephone number.

4. The facsimile communication apparatus according to claim 3, wherein
the setting acceptance part accepts a setting for defining an extension number as the telephone number stored in the telephone number storage part to automatically make the setting as to the unnecessity of the collation, and automatically makes the setting as to the necessity of the collation except the acceptance of the setting.

5. The facsimile communication apparatus according to claim 1, further comprising:
a determination part configured to determine whether a predetermined command symbol indicating the unnecessity of the collation with the called telephone number is added to the telephone number accepted by the destination acceptance part, wherein
the control part allows the transmission part to transmit the image data unconditionally when the determination part determines that the command symbol is added to the telephone number.

6. The facsimile communication apparatus according to claim 2, further comprising:
a determination part configured to determine whether a predetermined command symbol indicating the unnecessity of the collation with the called telephone number is added to the telephone number accepted by the destination acceptance part, wherein
the control part allows the transmission part to transmit the image data unconditionally when the determination part determines that the command symbol is added to the telephone number.

7. The facsimile communication apparatus according to claim 3, further comprising:
a determination part configured to determine whether a predetermined command symbol indicating the unnecessity of the collation with the called telephone number is added to the telephone number accepted by the destination acceptance part, wherein
the control part allows the transmission part to transmit the image data unconditionally when the determination part determines that the command symbol is added to the telephone number.

8. The facsimile communication apparatus according to claim 4, further comprising:
a determination part configured to determine whether a predetermined command symbol indicating the unnecessity of the collation with the called telephone number is added to the telephone number accepted by the destination acceptance part, wherein
the control part allows the transmission part to transmit the image data unconditionally when the determination part determines that the command symbol is added to the telephone number.

9. The facsimile communication apparatus according to claim 5, further comprising:
an operation acceptance part configured to accept an operation for adding the command symbol to the telephone number of the transmission destination.

10. The facsimile communication apparatus according to claim 6, further comprising:
an operation acceptance part configured to accept an operation for adding the command symbol to the telephone number of the transmission destination.

11. The facsimile communication apparatus according to claim 7, further comprising:
an operation acceptance part configured to accept an operation for adding the command symbol to the telephone number of the transmission destination.

12. The facsimile communication apparatus according to claim 8, further comprising:
an operation acceptance part configured to accept an operation for adding the command symbol to the telephone number of the transmission destination.

13. A method for controlling a facsimile communication apparatus, comprising the steps of:
accepting a telephone number of a transmission destination (S11);
calling the telephone number (S17);
receiving a called telephone number from a called station (S19);
collating the called telephone number with the calling telephone number (S27);
designating, for each telephone number, necessity/unnecessity of the collation (S21);
transmitting image data to the transmission destination (S29);
performing the collation when the necessity of the collation is designated, transmitting the image data when the called telephone number matches with the calling telephone number, and prohibiting the transmission of the image data when the called telephone number does not match with the calling telephone number (S31); and
transmitting the image data unconditionally when the unnecessity of the collation is designated.

14. The method according to claim 13, wherein
the facsimile communication apparatus includes a telephone number storage part configured to store telephone numbers of plural destinations, and
in the step of accepting the telephone number of the transmission destination, the telephone number of the transmission destination to be accepted is selected from the telephone numbers of the plural destinations stored in the telephone number storage part (S41),
the method further comprising the step of:
performing the collation when the accepted telephone number is not selected from the telephone numbers stored in the telephone number storage part, transmitting the image data when the called telephone number matches with the calling telephone number, prohibiting the transmission of the image data when the called telephone number does not match with the calling telephone number, and transmitting the image data unconditionally when the accepted telephone number is selected from the telephone numbers stored in the telephone number storage part.

15. The method according to claim 14, further comprising the steps of:
accepting, for each telephone number, a setting as to the necessity/unnecessity of the collation;
registering the setting in the telephone number storage part in correspondence with the telephone number; and
referring to the telephone number storage part to transmit the image data unconditionally when the setting corresponding to the accepted telephone number is a setting as to the unnecessity of the collation, to perform the collation when the setting corresponding to the accepted telephone number is a setting as to the necessity of the collation, to transmit the image data when the called telephone number matches with the calling telephone number, and to prohibit the transmission of the image data when the called telephone number does not match with the calling telephone number.

16. The method according to claim 15, wherein
the step of accepting the setting accepts a setting for defining an extension number as the telephone number stored in the telephone number storage part to automatically make the setting as to the unnecessity of the collation, and automatically makes the setting as to the necessity of the collation except the acceptance of the setting.

17. The method according to claim 13, further comprising the steps of:
determining whether a predetermined command symbol indicating the unnecessity of the collation with the called telephone number is added to the accepted telephone number; and
transmitting the image data unconditionally when the command symbol is added to the telephone number.

18. The method according to claim 14, further comprising the steps of:
determining whether a predetermined command symbol indicating the unnecessity of the collation with the called telephone number is added to the accepted telephone number; and
transmitting the image data unconditionally when the command symbol is added to the telephone number.

19. The method according to claim 15, further comprising the steps of:
determining whether a predetermined command symbol indicating the unnecessity of the collation with the called telephone number is added to the accepted telephone number; and
transmitting the image data unconditionally when the command symbol is added to the telephone number.

20. The method according to claim 16, further comprising the steps of:
determining whether a predetermined command symbol indicating the unnecessity of the collation with the called telephone number is added to the accepted telephone number; and
transmitting the image data unconditionally when the command symbol is added to the telephone number.

21. The method according to claim 17, further comprising the step of:
accepting an operation for adding the command symbol to the telephone number of the transmission destination.

22. The method according to claim 18, further comprising the step of:
accepting an operation for adding the command symbol to the telephone number of the transmission destination.

23. The method according to claim 19, further comprising the step of:
accepting an operation for adding the command symbol to the telephone number of the transmission destination.

24. The method according to claim 20, further comprising the step of:
accepting an operation for adding the command symbol to the telephone number of the transmission destination.
